# EUROPEAN PATENT APPLICATION

(11) **EP 4 458 156 A1**
(43) Date of publication of application: **06.11.2024**
(21) Application number: 23315168.7
(22) Date of filing: 05.05.2023
(51) Int. Cl.: A21D 8/04, A21D 13/43

(54) **METHODS FOR PREPARING A DOUGH OR A BAKED OR PARTIALLY BAKED PRODUCT AND PRODUCTS OF THESE METHODS**

(71) Applicant: Fourneo, 62500 Leulinghem (FR)
(72) Inventor: Breedveld, Mario, 62500 LEULINGHEM (FR); Lefever, Kristof, 62500 LEULINGHEM (FR); Bruggink, Suzan, 62500 LEULINGHEM (FR); Gobbetti, Marco, 39100 Bolzano (IT); Di Cagno, Raffaella, 39100 Bolzano (IT); Polo, Andrea, 39100 Bolzano (IT)
(74) Representative: van Dam, Vincent

(57) **Abstract**

The present invention relates to a method for preparing a dough for a baked product, in particular a bread product, and a dough obtained or obtainable by this method. The present invention also relates to a method for preparing a baked or partially baked food product and a baked or partially baked product, in particular a bread product, obtained or obtainable by this method.

## Description

The present invention relates to a method for preparing a dough for a baked product, in particular a bread product, and a dough obtained or obtainable by this method. The present invention also relates to a method for preparing a baked or partially baked food product and a baked or partially baked product, in particular a bread product, obtained or obtainable by this method.

Bread and similar products are food products obtained by fermentation, rising and then baking of a dough based on cereal flour and water. The dough can contain further different ingredients and can be prepared in various ways in order to produce a huge variety of products, including but not limited to several types of bread, breadstick, flatbread, pizza, etc.

The dough may include flours coming from wheat, corn, rye, barley, spelt, rice, oats, etc. or legumes flours, such as soybeans, beans, peas, lupin beans, lentils in addition to additional ingredients such as butter, oil, spices, etc.

For the production of bread a yeast of industrial or natural type may be used.

Industrial yeasts are usually referred to with the term "baker's yeast". Baker's yeast is represented by selected cultures of yeasts of the *Saccharomyces cerevisiae* species. In general, industrial yeasts allow a quick rising process.

On the other hand, natural yeasts are commonly used in sourdoughs. Sourdough is a dough made of flour, in particular wheat flour, and water, which is acidified by a complex of natural yeasts and lactic and/or acetic bacteria (often referred to as LAB and AAB, respectively). Sourdough comprises in this respect usually several species of heterofermentative and homofermentative lactic bacteria of the Lactobacillus generis. The fermentation of the lactic bacteria produces organic acids and allows a higher digestibility and conservation of the product. Lactic acid bacteria are preferred above acetic acid bacterial because acetic acid may have a more sour and pungent taste compared to lactic acid, while lactic acid has a milder taste.

Various methods to make bread products and the like are known, and there are many ways possible to obtain the final dough intended for the baking. In essence, these are three main methods: direct, semi-direct and indirect.

In the direct method, the dough is obtained by mixing all the ingredients, including the yeast, in a single step, followed by fermenting and rising.

In the semi-direct method, the dough is obtained by mixing the ingredients together in a single step and differs from the direct method in that the yeast is added after mixing the other ingredients, and then followed by fermenting and rising.

The indirect method comprises two steps. In a first step, a pre-dough named "biga" is prepared from water, yeast and flour; in the second step all the remaining ingredients are added to the pre-dough, followed by fermenting and rising.

Upon mixing or combining the ingredients with water in the dough, the proteins contained in most of the cereal flours, particularly the gliadin and the glutenin, are hydrated. This results in the formation of a protein complex called gluten, which basically functions as a supporting structure of the dough. The presence of gluten in the flour and water mass makes the composition compact, elastic and allows it to be mechanically worked and retain starches and gasses that form bubbles upon formation, which on its turn provides the product with a spongy structure following baking.

Notwithstanding the advantageous characteristics of gluten in the preparation of bread products in the sense of technological properties and palatability, a substantial part of the population is intolerant towards gluten to a mild or more severe extent. A small amount of the population is actually allergic for gluten (celiac disease). However most people suffer to a certain extent to gluten intolerance, digestion of gluten causes various complaints in these patients. These complaints can occur in different degrees. Most people who are (more) sensitive to gluten digestion experience bloating, cramping and intestinal pain. These symptoms occur mostly because of the occupation of the gastrointestinal with air/gas.

A decrease of gluten content in bread could also help relieve these complaints. Many people with gluten intolerance tolerate sour dough bread. Sourdough is not gluten free, but the LAB/AAB bacteria used to prepare sourdough break down a portion of the gluten in the flour making the resulting product easier to digest. The use of sourdough is not always desired because of its sour taste. In addition, it is difficult to control the fermentation, resulting in taste deviations. In addition, it is difficult for the processability because the fermentation has an effect on the protein functionalities in the dough and during baking. Further, in order to achieve substantial gluten degradation a long fermentation of sourdough would be necessary. A long fermentation on its turn results in unprocessable dough (slimy appearance) that can no longer rise during baking.

In order to achieve degradation of gluten in an end product and to experience a positive effect from this, it is preferred that essentially all gluten-containing flour (which in most cases is wheat flour) is fermented. That would require a fermentation of almost the entire dough, instead of an x% of the dough (normally around 40%). However, when/if an entire dough is completely fermented, taste and structure deviations will be experienced more quickly. An example is the abovementioned sour taste of a typical sourdough bread. With a flatbread, which is a product of particular interest in the context of the present invention, this sour taste is not desirable and therefore a more precise fermentation must be carried out.

Consumption of dough products such as bread by people affected by diabetes may also lead to risks. In view of that care should be taken by these people with regard to carbohydrate content and especially to the glycemic index of foods. The glycemic index of a food product represents the speed at which the glycaemia (glucose concentration in the blood) increases after consumption of the product. A high glycemic index indicates a high absorption speed of carbohydrates and therefore a high insulin request. Since the glycemic index of conventional bread products is relatively high, the consumption thereof, apart for small quantities, is discouraged for people having glycaemia problems.

The present invention aims to overcome these problems.

### Summary of the invention

The invention relates in a first aspect to a method for preparing a dough for baked food products comprising the steps of providing a first composition comprising water, flour, and a starter based on lactic and/or acetic bacteria and optional wild yeasts and allowing fermentation of said first composition to form a sourdough; mixing the sourdough with water, flour and baker's yeast, and allowing fermentation of said mixture to form a final dough.

The invention relates in a second aspect to a method for preparing a dough for baked food products comprising the steps of providing a first composition comprising water, flour, and a starter based on lactic and/or acetic bacteria and optional wild yeasts and allowing fermentation of said first composition to form a fermented sourdough; providing a second composition comprising water, flour and baker's yeast and allowing fermentation of said second composition separate from the first composition to form a pre-dough; mixing the fermented sourdough with the pre-dough to provide a final dough.

The invention relates in a third aspect to a dough, obtained or obtainable by the method of the first or second aspect.

The invention relates in a fourth aspect to a method for preparing a baked or partially baked food product, comprising preparing a dough in accordance with the method of the first or second aspect; preparing a baked or partially food product with said dough, comprising kneading and proofing the dough, allowing the proofed dough to rest, shaping and sizing the proofed dough and baking or partially baking the shaped and sized dough.

The invention relates in a fifth aspect to a baked or partially baked product, obtained or obtainable by the method according to the fourth aspect.

The inventors have surprisingly found that by the combination of a fermented sourdough composition with a fermented pre-dough (biga) or by the combination of a fermented sourdough composition with the ingredients of such a biga and subsequent fermentation, a dough and baked or partially baked products are obtained having and a low (predicted) glycemic index (thus longer satisfaction), better digestibility and a better bioavailability of nutrients.

Further, the dough of the invention can be obtained using acceptable fermentation times.

### Short description of the drawings

Fig.1 shows a flow chart of the process steps involved in preparations 1-5. Fig. 1B is a continuation of Fig. 1A. Fig. 1C is a continuation of Fig. 1B.
Fig.2 shows a schematic representation of an *in vitro* simulation of upper gastrointestinal tract transit and digestion as performed in the examples section.
Fig.3 shows a Principle Component Analysis (PCA) of the biochemical and nutritional characteristics of preparations 1-6 of the examples section.

### Detailed description of the invention

The present invention is based on the finding that combining a fermented sourdough composition with a fermented pre-dough (biga) or combining a fermented sourdough composition with the ingredients of such a biga and subsequent fermentation a dough and baked or partially baked products are obtained having a low glycemic index, high digestibility and high bioavailability of nutrients and wherein the preparation requires fermentation within an acceptable time frame.

The sourdough in the context of the invention is prepared from water, flour, and a starter based on lactic and/or acetic bacteria and optional wild yeasts (first composition). Any flour containing starch is suitable for a sourdough, since it is the sugar that the microbes feed on. Glutenous flours, such as spelt, einkorn, rye, and wheat, are preferred in view of taste and processability, but it may be possible to use gluten-free flours, including buckwheat, amaranth, brown rice, and teff. In view of the advantageous effects if the invention with regard to gluten content, acceptable products can be obtained with flours that contain gluten and which can be processed in accordance with known processes, spelt, einkorn, rye, and wheat or a combination thereof. In a preferred embodiment the flour is wheat flour because this wheat is a well-known material for making popular baking products such as flatbread, such as pinsa. In view of this, even gluten sensitive people may be able to eat a wheat based or containing product in accordance with the invention without problems in view of gluten intolerance. For preparing the sourdough a so-called sourdough starter culture is used that is based on lactic acid bacteria and optional wild yeasts and acetic acid bacteria. These wild yeasts are distinguished from the baker's yeast in the biga as discussed below and may include without limitation *S. exiguus, S. cerevisiae* (naturally occurring strains), and *Candida milleri* (or *humilis*) as the most common yeast species populating sourdoughs. In other words, biga ingredients or biga composition do not contain added baker's yeast.

Preparation of sourdough also requires lactic acid bacteria. Lactic acid bacteria are preferred above acetic acid bacterial because acetic acid may have a more sour and pungent taste compared to lactic acid, while lactic acid has a milder taste. In that respect it is preferred that the sourdough comprises lactic acid bacteria. Lactic acid bacteria are rod-shaped or spherical, and primarily produce lactic acid. These bacteria are much smaller than yeasts and in a typical starter, lactic acid bacteria outnumber yeasts by up to 100 to 1. Like some yeasts, lactic acid bacteria digest simple carbohydrates, but instead of the alcohol created by yeast, lactic acid bacteria mostly produce sour lactic acid as a byproduct.

Lactic acid bacteria are generally classified into two groups: homofermentative and heterofermentative strains. Homofermentative (or homolactic) lactobacteria only produce lactic acid. Bacteria in this category include *Lactococcus, Enterococcus, Streptococcus, Pediococcus,* and L. *acidophilus.*

Heterofermentative lactobacilli produce lactic acid, but also acetic acid, ethanol, and even carbon dioxide (thus providing some leavening power). These bacteria grow and function well at temperatures between 15-22°C.

Sourdough comprises in this respect usually several species of heterofermentative and homofermentative lactic bacteria of the Lactobacillus generis, and in view of the leavening power it is preferred that at least heterofermentative lactobacilli are present in the first composition or sourdough. It is also noted that stable sourdough cultures contain mostly heterofermentative lactic acid bacteria such as *L. fermentum* and *L. plantarum,* which outcompete the less adaptable homofermentative lactobacilli.

The biga or the biga ingredients that may form the second composition comprise water, flour and baker's yeast. Recipes for biga may depend on the intended baking product and are known in the art. With regard to the flour in the biga composition, in principle the same applies as for the sour dough. Any flour containing starch is suitable for a sourdough with a preference for glutenous flours, such as spelt, einkorn, rye, and wheat with a particular preference for wheat flour. However, the main difference resides in the microorganisms. In the biga composition baker's yeast is used as opposed to the natural yeast strains in the sour dough. Baker's yeast is the common name for strains of yeast that are commonly used in baking bread and other bakery products. These yeasts serve as a leavening agent which causes the bread to rise by converting the fermentable sugars present in the dough into carbon dioxide and ethanol. Baker's yeast is of the species Saccharomyces cerevisiae, and although it may be the same species as the kind that may be used in the sourdough preparation, it is not the same strain. Also, no lactic acid bacteria and no acetic acid bacteria are added in the biga composition. In this respect, it is preferred that the only microorganism in the second or biga ingredients is baker's yeast.

As mentioned above, sourdough may be added to the biga or biga ingredients in significant amounts, preferably in a weight ratio of 1: 99 or more, depending on the amount of water in the sourdough and biga, such as 10:90 or more, 20:80 or more, 30:70 or more, 40: 60 or more, 50: 50 or more, or 60:40 or more and preferably less than 90:10, less than 80:20 or less than 70:30, for instance a ratio of up to 50:50 (or 1:1). It is possible to work with liquid sourdough, but also more solid sourdoughs may be used, for instance in the form of pastes or powders. In particular in case of liquid sourdoughs, at least up to a ratio of 1:1 the taste and process are not adversely affected by the use of sourdough, while the advantageous effects of a low glycemic index, high digestibility and high bioavailability of nutrients are achieved.

It is preferred that the fermented sourdough composition is combined with the biga ingredients followed by a subsequent fermentation i.e. that the method for preparing the dough comprises the steps of providing a first composition comprising water, flour, and a starter based on lactic and/or acetic bacteria and optional wild yeasts and allowing fermentation of said first composition to form a fermented sourdough; mixing the fermented sourdough with water, flour and baker's yeast, and allowing fermentation of said mixture to form a final dough - in accordance with the first aspect of the invention. The inventors have observed that with this approach the best results are obtained with regard to a low glycemic index, high digestibility and high bioavailability of nutrients as is evidenced in the examples section of this application below. The step of mixing the fermented sourdough with water, flour and baker's yeast, corresponds to mixing the fermented sourdough with the ingredients of a pre-dough or biga. In this regard it is to be understood that among the ingredients of the pre-dough or biga the yeast is a baker's yeast which is of the species Saccharomyces cerevisiae. In the sourdough also a yeast may be used of a (naturally occurring) Saccharomyces cerevisiae species but this is not the same strain as in the baker's yeast of the biga or pre-dough. Also, no lactic acid bacteria and no acetic acid bacteria are added in the ingredients of the pre-dough or biga. In this respect, it is preferred that the only microorganism among the ingredients of the biga or pre-dough is baker's yeast.

The biga ingredients in the embodiment of the first aspect can be combined and admixed with the sourdough as separate ingredients or the biga ingredients may be mixed in advance to provide a second composition, wherein the second composition comprises water, flour and baker's yeast and the fermented sourdough is mixed with this second composition. To ensure process uniformity the latter is in principle preferred.

In the embodiment of the first aspect the first composition may suitably be fermented at a temperature of 18-35°C, such as between 21-32°C, for at least 12 hours, such as between 12 and 24 hours, to obtain a fermented sourdough and the mixture of the fermented sour dough and biga ingredients may suitably be fermented at a temperature of 10-22°C, such as 15-19 °C or 12-14 °C for at least 24 hours, such as between 24 hours and 72 hours. In a preferred embodiment, the first composition is fermented at a temperature of 30 ° C for at least 18 hours, for instance for a duration of 18 hours to obtain the fermented sourdough. The subsequent mixture of the fermented sourdough and the biga ingredients is preferably fermented at 16°C for at least 48 hours, for instance for a duration of 48 hrs.

In an alternative embodiment the method of the invention is carried out in accordance with the second aspect of the invention. Herein, the method for preparing a dough for baked food products comprises the steps of providing a first composition comprising water, flour, and a starter based on lactic and/or acetic bacteria and optional wild yeasts and allowing fermentation of said first composition to form a sourdough; providing a second composition comprising water, flour and baker's yeast and allowing fermentation of said second composition separate from the first composition to form a pre-dough; and mixing the sourdough with the pre-dough to provide a final dough. The difference between the method of the second aspect differs from the method of the first aspect in that in accordance with the method of the second aspect a pre-dough or biga is fermented separately from the sourdough after which the fermented sourdough and fermented biga are combined, while according to the method of the first aspect, the fermented sourdough is mixed with biga ingredients followed by a fermentation under conditions as if it were the normal biga fermentation step. Although the advantageous effects regarding a low glycemic index, high digestibility and high bioavailability of nutrients may be less pronounced if the method of the second aspect is applied, still significant advantages are achieved and the method of the second aspect may in appropriate cases be suitably chosen in view of process considerations.

In the embodiment of the second aspect the first composition may suitably be fermented at a temperature of 21-32°C for at least 12 hours, such as between 12 and 24 hours, and said second composition may suitably fermented at a temperature of 15 - 22 °C, such as 15 - 19°C, for at least 24 hours, such as between 24 hours and 72 hours. Preferably, the first composition is fermented at a temperature of 30°C for at least 18 hours, such as for 18 hours. Said second composition is preferably fermented at 16°C for at least 48 hours, such as 48 hours.

With regard to the second composition in the method of the second aspect, the same considerations apply as for the biga ingredients in the method of the first aspect, wherein the second composition may suitably consist of water, flour and baker's yeast.

Once a final dough has been obtained in accordance with the method of the first or second aspect, the dough can be used to prepare a baked or partially baked food product, comprising kneading and proofing the dough, allowing the proofed dough to rest, shaping and sizing the proofed dough and baking or partially baking the shaped and sized dough. These process steps are well-known in the are and can be designed on the basis of the product and production facility. For instance, the final dough may be kneaded and proofed for 2 hrs at 24°C to allow resting and forming, followed by shaping and cutting.

Optionally, leftovers after shaping and cutting can be reworked into the dough.

The shaped and cut dough can be processed to a plain product or a product with a topping such as a tomato topping. For instance, a tomato sauce may be provided and deposited on the shaped and cut dough to provide a topped product.

The plain or topped products can be baked for a suitable time and temperature, such as 3 minutes at 330 °C. After baking the products or partially baked products can be cooled to ambient temperature and optionally frozen, after which they can be transported to retail or foodservices.

The present invention is in particular suitable for the production of bread or bread-like products, in particular flatbreads. In accordance, the baked or partially baked food product may suitably be a flatbread. The flatbread may suitably be selected from the group of pinsa, focaccia, pita or naan. A particularly suitable product is pinsa. In accordance, it is preferred that the baked or partially baked product is a pinsa. The word pinsa comes from the latin word pinsere, which means 'to beat flat'. For this purpose the bough is flattenend in pull-like motions, leaving a pinsa with characteristic focaccia-like grooves and bumps. Originally pinsas are pressed in by hand, so that the toppings remain in place and the dough is crispy. A pinsa is different from for instance a pizza in several respects. The pinsa is more digestible because the dough is allows to rest longer. The composition of the dough also provides fewer calories and less fat. Pinsas are crispy and can be topped with all kinds of ingredients. Pinsas are traditionally prepared from different types of flour. Traditional pinsa recipes contain wheat, soy and rice flour, which is added to a mother dough. Soy flour is added for brittleness, rice flour helps retain water and provides fluffiness during baking. This combination of flours and a lot of water makes the dough airy and crunchy. Soy and rice flour do not contain any gluten, which helps to make the product more easily digestible. Pinsa dough contains relatively high amounts of water. In accordance with the invention the final dough may therefore suitably contain 75-85 wt.% water if the intended products are pinsas. In traditional preparation processes the pinsa dough requires cold fermentation for long periods. With the present invention it becomes possible to produce high quality pinsas with good taste and appearance in a relatively short process time.

### Examples

The following examples are meant to illustrate the principle of the invention and not to limit the scope of the claims.

In the following examples the effect of different fermentation conditions and process parameters were assessed in biga dough on the degree of digestibility and on biochemical and nutritional characteristic of final products. The study was performed by using an in vitro, validated and representative simulation of upper gastrointestinal tract (i.e. stomach and small intestine). The project also included analyses of the original and commercial baked goods (original preparations) in comparison with the *in vitro* digested counterparts (digested preparations).

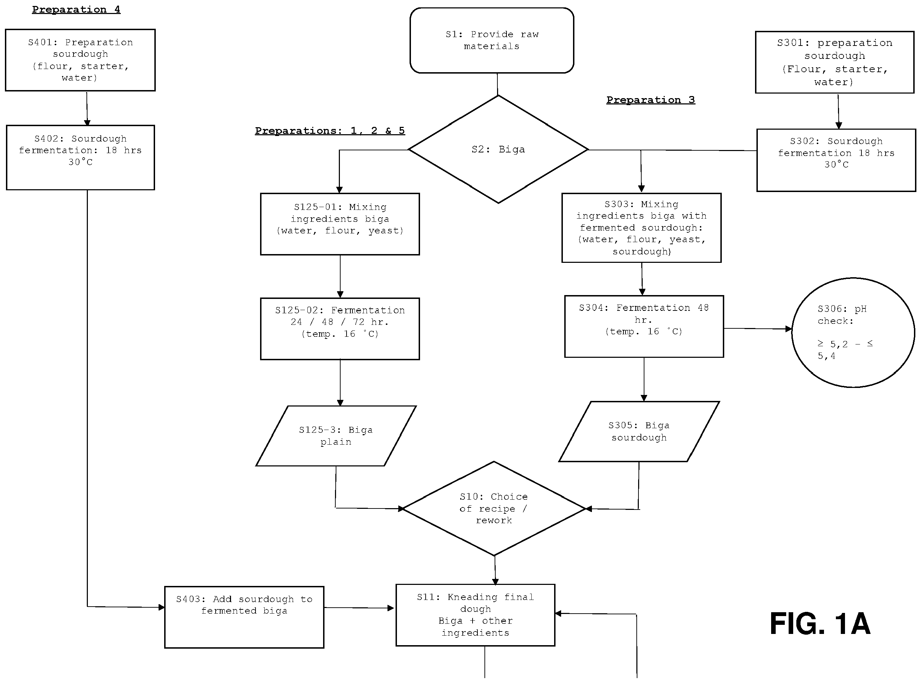

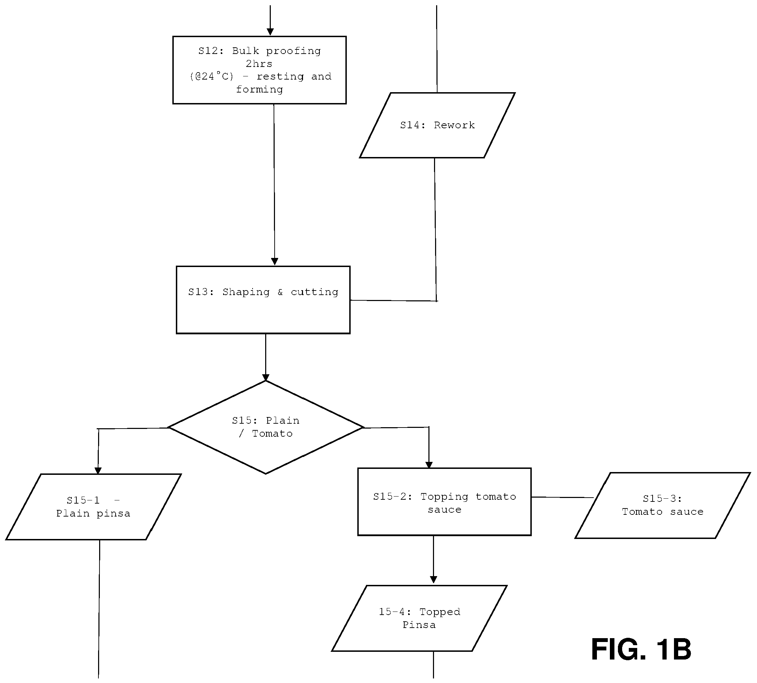

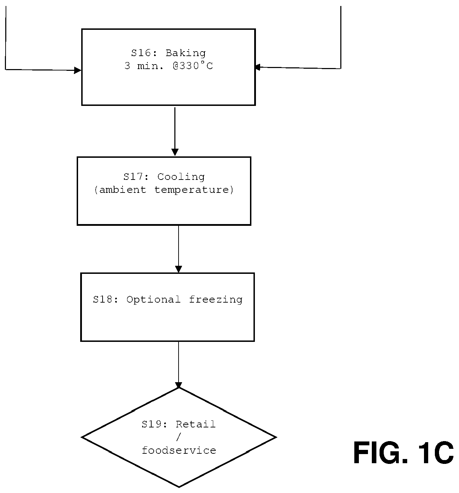

Six exemplary doughs for preparing pinsas and pinsa products were investigated in the present examples. The preparation and compositions are described in Tables 1 and 2 below and Fig. 1.

**Table 1. Preparations and manufacturing process.**

| | **Biga ingredients** | **Fermentation time** | **Other ingredients mix** | **Final dough fermentation** |
|---|---|---|---|---|
| **Preparation 1 (comparative)** | flour (wheat, rice and soya), water, yeast | 48 H | water, yeast, oil, and salt | 2 hrs bulk fermentation + 1,5 hr processing and resting |
| **Preparation 2 (comparative)** | flour (wheat, rice and soya), water, yeast | 24 H | water, yeast, oil, and salt | 2 hrs bulk fermentation + 1,5 hr processing and resting |
| **Preparation 3 (according to a first embodiment of the invention)** | flour (wheat, rice and soya), water, sourdough, yeast | 48 H | water, yeast, oil, and salt | 2 hrs bulk fermentation + 1,5 hr processing and resting |
| **Preparation 4 (according to a second embodiment of the invention)** | flour (wheat, rice and soya), water, yeast | 48 H | water, sourdough, yeast, oil and salt | 2 hrs bulk fermentation + 1,5 hr processing and resting |
| **Preparation 5 (comparative)** | flour (wheat, rice and soya), water, yeast | 72 H | water, yeast, oil, and salt | 2 hrs bulk fermentation + 1,5 hr processing and resting |
| **Preparation 6 (comparative)** | no pre-dough | no pre-dough (thus no fermentation) | flour (wheat, rice and soya), water, yeast, oil and salt | 2 hrs bulk fermentation + 1,5 hr processing and resting |

**Table 2: detailed compositions of preparations 1-6.**

| **Preparations** | | | | | | | |
|---|---|---|---|---|---|---|---|
| **Ingredients (%, w/w)** | | **1** | **2** | **3** | **4** | **5** | **6** |
| *Pinsa Romana dough* | | | | | | | |
| Wheat flour | | - | - | - | - | - | 50 |
| Rice flour | | - | - | - | - | - | 4 |
| Soy flour | | - | - | - | - | - | 1.5 |
| Biga* | | 88 | 88 | 90 | 73 | 88 | - |
| | *Wheat flour* | 51 | 51 | 49 | 42 | 51 | - |
| | *Rice flour* | 4 | 4 | 4.5 | 4 | 4 | - |
| | *Soy flour* | 1.5 | 1.5 | 1.5 | 1.5 | 1.5 | - |
| | *Water* | 31 | 31 | 29 | 25 | 31 | - |
| | *Baker's yeast* | <1 | <1 | <1 | <1 | <1 | - |
| | *Sourdough* | - | | 5 | | | - |
| Water | | 10 | 10 | 8 | 5 | 10 | 42 |
| Baker's yeast | | - | - | <1 | <1 | - | <1 |
| Sourdough | | - | - | - | 19 | - | |
| Olive oil | | 1.5 | 1.5 | 1.5 | 1.5 | 1.5 | 1.5 |
| Salt | | 1 | 1 | 1 | 1 | 1 | 1 |

Preparations 1, 2 and 5 represent comparative examples and are made as follows. First raw materials (S1) are provided with the purpose of making a biga (S2) by mixing the materials (S125-01), next the mixture is cold fermented at 16°C for 24 hrs (preparation 1), 48 hrs (preparation 2) and 72 hrs (preparation 5), respectively (S125-02). After fermentation a plain biga has been obtained (S125-3), which can be subjected to further processing after making a choice of recipe (S10). Optionally a part of the biga can be reworked as a starter in step (S125-01).

Preparation 3 is a preparation according to a first embodiment of the invention, namely wherein a first composition comprising water, flour, and a starter based on lactobacilli and optional wild yeasts is provided and allowed to ferment to form a sourdough; and wherein the sourdough is mixed with a second composition comprising water, flour and baker's yeast and allowed to ferment form a final dough. Mixing ratio was 1:1 (weight). In preparation 3 first a sourdough is prepared (S301) by mixing the ingredients followed by fermenting for 18 hrs at 30°C (S302). Next, the fermented sour dough is mixed with ingredients of a standard biga (water, flour, yeast) in amounts thereof that meet the requirements of such a standard biga (S303), in the present case the weight ratio sour dough : biga ingredients was 1:1. Next the mixture is fermented for 48 hrs at 16° (S304) to result in a biga sourdough (S305). The pH is checked and optionally adapted to be in the range of ≥ 5,2 - ≤ 5,4 (S306). The biga sourdough can be subjected to further processing after making a choice of recipe (S10). Optionally a part of the biga sourdough can be reworked as a starter in step (S303).

Preparation 4 is a preparation according to a second embodiment of the invention, namely wherein a first composition comprising water, flour, and a starter based on lactobacilli and optional wild yeasts is provided and allowed to fermentation to form a sourdough. A second composition comprising water, flour and baker's yeast is also provided and allowed to ferment separately from the first composition to form a pre-dough. After that, the sourdough is mixed with the pre-dough to provide a final dough. In preparation 4, first a sourdough is prepared (S401) by mixing the ingredients followed by fermenting for 18 hrs at 30°C (S402). Parallel to that, a biga is prepared by mixing suitable materials, next the biga mixture is cold fermented at 16°C for 24-48 hrs (essentially in accordance with S2, S125-01, S125-02, S125-3). The fermented biga is mixed with the fermented sourdough (S403).

Preparation 6 is a recipe for a direct preparation of dough for pinsas (1080 g wheat flour, 200 g rice flour, 70 g soy flour + 1 liter of cold water, 2-6 g yeast, 25 g sea salt, 20 g olive oil, 25-65 grams dried mother yeast.

The next steps are in principle the same for all preparations 1-6. The final dough is kneaded (S11) and proofed for 2 hrs at 24°C to allow resting and forming (S12), followed by shaping and cutting (S13). Optionally, leftovers can be reworked (S14) into the dough (S11).

The shaped and cut dough (S13) can be processed (S15) to a plain pinsa (S15-1) or a pinsa with tomato topping (S15-4). For the latter a tomato sauce is provided (S15-3) and deposited on the shaped and cut dough (S15-2) to provide a topped pinsa (S15-4).

The plain or topped pinsas are baked for 3 minutes at 330 °C (S16), cooled to ambient temperature (S17) and optionally frozen (S18) after which they can be transported to retail or foodservices (S19).

### Methods and results

### Biochemical and nutritional characterization of the six original preparations.

**Nutritional label.** The nutritional label of different preparations (final, baked products) was determined. Ash, protein (total nitrogen × 5.7) and fats were evaluated on original samples according to Rapporti ISTISAN 1996/34 (Baldini et al., 1996). Total carbohydrates were calculated as the difference (100 - [proteins + lipids + ash]).

**Results.** Table 3 reports the data obtained for the different preparations (final products).

**Table 3. Nutritional values of the preparations 1-6 (final products).**

| | **Preparation 1** | **Preparation 2** | **Preparation 3** | **Preparation 4** | **Preparation 5** | **Preparation 6** |
|---|---|---|---|---|---|---|
| Moisture (%) | 34.3 | 36.5 | 31.5 | 32.5 | 33.4 | 35.5 |
| Total Fat (g/100 g) | 5.6 | 5.7 | 5.4 | 5.9 | 5.5 | 5.8 |
| Total Carbohydrate (g/100 g) | 76.0 | 75.8 | 77.4 | 76.8 | 76.9 | 76.8 |
| Ash (g/100 g) | 2.7 | 2.5 | 2.4 | 2.5 | 2.4 | 2.5 |
| Protein (g/100 g) | 15.8 | 16.0 | 14.8 | 14.8 | 15.2 | 14.9 |
| Energy value (Kcal/100g) | 406 | 413 | 411 | 417 | 412 | 411 |

**pH and TTA.** The pH of different samples was determined through a food penetration probe of pH meter (Model 507, Crison, Milan, Italy). Total titratable acidity (TTA) was also measured. For this purpose, samples (10 g) were homogenized with 90 mL of d-H2O. Then, the pH was measured by addition of 0.1 M sodium hydroxide (NaOH) until pH value reached 8.3.

**Results.** The inclusion of baker's yeast and sourdough in combination with a mixture of wheat, soy, and rice flours in biga samples, affected the acidity of the six final products (Table 4).

**Table 4. Biochemical and nutritional characteristics of preparations 1-6 (final products). pH, total treatable acidity (TTA) (mL of NaOH /pH 8.3), phytic acid (g/100g), in vitro protein digestibility (IVPD %) and predicted glycemic index (pGI). In the same column, values with different superscript letters differ significantly (p < 0.05) based on one-way ANOVA (Tuckey-Kramer). The data are the means of three independent analysis ± standard deviations (n =3).**

| | **pH** | **TTA** | **Phytic acid** | **IVPD** | **pGI** |
|---|---|---|---|---|---|
| **Preparation 1** | 5.48 ± 0.02^{b} | 3.3 ± 0.1^{c} | 0.11 ± 0.02^{a} | 63.0 ± 0.8^{a} | 67.8 ± 0.8^{a} |
| **Preparation 2** | 5.61 ± 0.01^{a} | 2.9 ± 0.1^{d} | 0.12 ± 0.02^{a} | 62.9 ± 0.4^{a} | 68.8 ± 0.3^{a} |
| **Preparation 3** | 4.27 ± 0.02^{d} | 8.4 ± 0.3^{a} | 0.09 ± 0.01^{a} | 60.3 ± 0.4^{a} | 63.9 ± 0.1^{b} |
| **Preparation 4** | 4.90 ± 0.02^{c} | 5.1 ± 0.1^{b} | 0.09 ± 0.02^{a} | 60.6 ± 1.1^{a} | 68.0 ± 1.1^{a} |
| **Preparation 5** | 5.41 ± 0.04^{b} | 3.1 ± 0.1^{cd} | 0.11 ± 0.01^{a} | 62.7 ± 1.9^{a} | 68.5 ± 0.4^{a} |
| **Preparation 6** | 5.60 ± 0.03^{a} | 2.3 ± 0.1^{e} | 0.12 ± 0.02^{a} | 62.2 ± 1.4^{a} | 71.3 ± 1.8^{a} |

All preparations produced with biga including baker's yeast showed a value of pH significantly (p < 0.05) higher compared to preparations produced with dough according to the invention (preparation 3 and preparation 4). Preparation 3 made with biga including sourdough showed the lowest pH value (4.27 ± 0.02) among all samples produced. Compared to preparation 3, a slight but significant (p < 0.05) higher pH was detected in the final product when sourdough was included in the final dough (preparation 4; 4.90 ± 0.02). However, it resulted significantly (p < 0.05) lower than that measured in preparations 1, 2, 5 and 6. The TTA values showed the opposite trend (Table 4). Preparation 3 and preparation 6 had the highest (8.4 ± 0.3) and the lowest (2.3 ± 0.1) TTA values, respectively, that resulted significantly (p < 0.05) different compared to all other preparations.

**In *vitro* protein digestibility, predicted glycemic index (pGI) and nutritional indexes.** The *in vitro* protein digestibility (IVPD) was determined through the method by Akeson & Stahmann (1964) modified by Rizzello et al. (2014). The supernatant containing the digested fraction was used for the estimation of proteins (Bradford, 1976), peptides (Church et al., 1983), and amino acids (Doi et al., 1981). The IVPD was reported by calculating the percentage of total protein that was solubilized after enzymatic hydrolysis [IVPD = (digested protein/total protein) × 100]. The starch hydrolysis evaluation during starch *in vitro* digestion were performed as described by De Angelis et al. (2007). The degree of starch digestion was expressed as percentage of potentially available hydrolyzed starch. A reference sample (white bread) was used as control to estimate the hydrolysis index (HI = 100). The predicted glycemic index (pGI) of original samples was determined through quantification of hydrolysis index (HI) using the equation of Capriles & Arêas (2013) pGI = 0.549 × HI + 39.71. The digested protein fraction coming from IVPD samples, was completely hydrolyzed in 5.7 M HCl (1 mL/10 mg of proteins) at 110 °C under nitrogen stream. All amino acids were analyzed by a Biochrom 30+ series Amino Acid Analyzer as described by Rizzello et al. (2014). Essential Amino Acids (EAA) Index, which estimates the quality of the test protein using its EAA content, was calculated according to the procedure by Oser (1959). The biological value (BV), which indicates the utilizable fraction of the test protein, was calculated using the equation of Oser (1959) BV = ([1.09×EAAI] - 11.70). The Protein Efficiency Ratio (PER), which estimates the protein nutritional quality based on the amino acid profile after hydrolysis, was determined using the model developed by Ihekoronye (1988). The NI, which normalizes the qualitative and quantitative variations of the test protein compared to its nutritional status, was calculated using the equation of Crisan and Sands (1978).

**Results.** The analysis of *in vitro* protein digestibility (IVPD), expressed as ratio of digested and undigested protein fractions, was performed to evaluate the effect of the six preparations after digestion. The lowest value of IVPD % was found for preparation 3 (60.3 ± 0.4 %), while the highest value (p > 0.05) was found for preparation 1 (63.0 ± 0.8 %). The trend showed higher value for preparation 1 (63.0 ± 0.8 %), preparation 2 (62.9 ± 0.4 %), preparation 5 (62.7 ± 1.9 %), and preparation 6 (62.2 ± 1.4%), which were prepared without sourdough. However, no statistical (p > 0.05) difference was found among all preparations (Table 4). The level of starch hydrolysis was assessed to predict the in vitro glycemic response (Table 4). The pGI values ranged between 63.9 ± 0.1 (preparation 3) and 71.3 ± 1.8 (preparation 6). Overall, preparation 3 was the only that showed a significantly (p < 0.05) lower pGI value compared with the other preparations. The other four preparations (preparation 1, 67.8 ± 0.8; preparation 2, 68.8 ± 0.3; preparation 4, 68.0 ± 1.1; preparation 5, 68.5 ± 0.4) did not statistically (p > 0.05) differ among them and compared with the commercial preparation 6 (71.3 ± 1.8). Nutritional indexes together with their limiting amino acids are listed in Table 5.

**Table 5. Nutritional indexes of the six preparations including essential amino acid (EAA) index, biological value (BV) index, protein efficiency ratio (PER), Nutritional Index (NI) and sequence of limiting EAA. Values in the same row with different superscript letters differ significantly (p < 0.05) based on one-way ANOVA (Tuckey-Kramer).**

| | **Preparation 1** | **Preparation 2** | **Preparation 3** | **Preparation 4** | **Preparation 5** | **Preparation 6** |
|---|---|---|---|---|---|---|
| **EAA index** | 68.99 ± 4.13^{a} | 68.97 ± 3.73^{a} | 72.61 ± 3.50^{a} | 71.55 ± 4.44^{a} | 75.26 ± 4.87^{a} | 75.85 ± 5.70^{a} |
| **BV index** | 63.50 ± 3.82^{a} | 63.48 ± 4.11^{a} | 67.44 ± 4.22^{a} | 66.29 ± 4.75^{a} | 70.33 ± 4.26^{a} | 70.98 ± 3.98^{a} |
| **PER** | 24.69 ± 2.11^{b} | 22.36 ± 1.71^{bc} | 30.33 ± 1.54^{a} | 23.32 ± 1.05^{bc} | 24.37 ± 1.61^{b} | 19.19 ± 1.29^{c} |
| **NI** | 2.86 ± 0.12^{b} | 2.91 ± 0.13^{b} | 3.87 ± 0.27^{a} | 3.03 ± 0.12^{b} | 3.60 ± 0.17^{a} | 2.77 ± 0.19^{b} |
| **Sequence of Limiting EAA** | Lysine | Leucine | Threonine | Lysine | Histidine | Methionine |
| | Tryptophan | Histidine | Lysine | Threonine | Lysine | Leucine |
| | Leucine | Tryptophan | Histidine | Histidine | Threonine | Histidine |

Generally, the sequence of limiting amino acids varied between every samples. The essential amino acids (EAA) index ranged from 68.97 ± 3.73 to 75.85 ± 5.70, where no statistical (p > 0.05) differences were found for the EAA index among all preparations. BV index did not show statistical (p > 0.05) differences among all samples. Overall, PER resulted to be significantly higher (p < 0.05) in preparation 3 (30.33 ± 1.54) while NI was significantly different (p < 0.05) on preparations 3 and 5 (3.87 ± 0.27 and 3.60 ± 0.17, respectively) compared to other preparations.

### 2.2 In vitro digestion procedure through a Simulator of Human Intestinal Microbial Ecosystem (SHIME) apparatus.

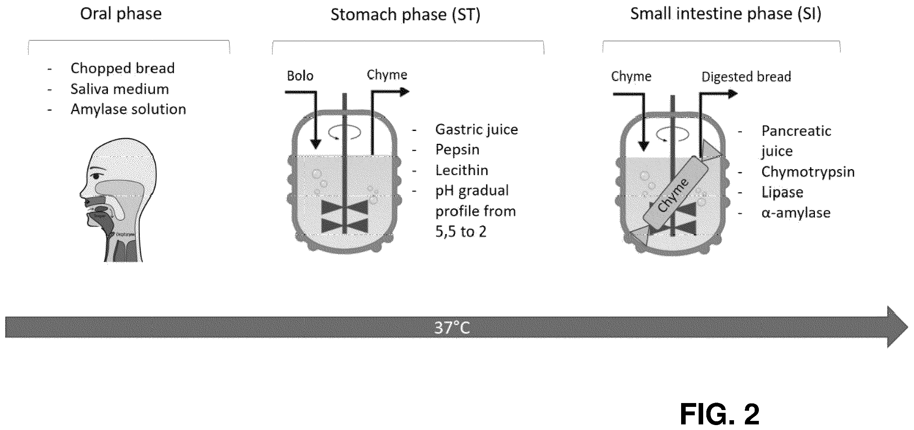

The *in vitro* digestion of different preparations was carried out according to Brodkorb et al. (2019) with some modifications. Briefly, the digestion comprised oral, stomach (ST) and small intestinal phases (SI). For every original preparation, the digestion was done in triplicate. The description of each digestion phase is schematicallt shown in Fig. 2) :
**i) Oral phase.** Sample was ground and freeze-dried, and 5.60 g of product was transferred to a SHIME^{®} vessel. The sample was mixed with the simulated salivary fluid (SSF solution), 1:2 (dry, w/w). The mixture was added with 0.75 ml of amylase solution (1500U/mL of SSF) and CaCl₂ 0.3 M solution (41.98 µL). The final mixture was mixed for 2 min at 37°C.
**ii) Stomach phase (ST).** The oral bolus was diluted 1:1 (v/v) with a solution mimicking the gastric fluid and stomach enzymes. The stomach phase incubation started adding 82.02 mL of gastric juice (0.3 g KCl and 1.4 g NaCl/100 mL ddH₂O) to the same reactor used for the oral phase. The reactor was then added with 6.07 mL of pepsin solution (0.2 g of pepsin from porcine gastric mucosa (≥ 400 U/mg) in 10 mL of HCl 5 mM) and 0.68 mL of lecithin solution (0.068 g lecithin/ 5 mL d-H₂0). Through the software of the SHIME apparatus, the pH was evolved in an automated and standardized way from -5.5 to 2 in 120 min of incubation. The entire gastric phase took place at 37 °C.
**iii) Small intestinal phase (SI).** 50 mL of simulated pancreatic juice (0.8 g of NaHCOs, 0.4 g of Oxgall in 50 mL of d H₂O), 4.5 mL of trypsin solution (50 mg of trypsin 5000 USP-U/mg in 5 mL of 1 mM HCl), 5.6 mL of chymotrypsin (100 mg chymotrypsin ≥ 1000 USP-U/mg in 10 ml of 1 mM HCl), 180 mg of lipase, 300 mg of hog α-amylase and 350 mL of 0.3 M CaCl₂ were added to 140 mL of chyme. The mixture (200 ml) was transferred to a dialysis membrane (cut-off = 14 kDa) and incubated in 400 mL of dialysis solution (NaHCOs 3.75 g/L in 2.4 L of d-H₂O, pH 7) within a SHIME vessel at 37°C. After the incubation, the digested samples were collected and stored at -80°C until further analyses.

**2.3 Biochemical and nutritional analysis on original and digested preparations.** All analysis reported in this paragraph were carried out on both original and digested preparations to evaluate the degree of digestion of the different preparations.

**Organic acids and sugars.** Water soluble extracts (WSE) were prepared based on Weiss et al. (1993). WSE were used to determine the concentration of organic acids and sugars on samples. Lactic and acetic acid were determined on the original and digested sample using a HPLC-UV system equipped with a 300 × 7.8 mm i.d. cation exchange column (Aminex HPX-87H) detected by measuring UV absorbance at 210 nm (Zeppa et al., 2001). Glucose, fructose, maltose, and mannitol were evaluated using the same method reported above and detected by refractometer (RI).

**Results.** Sugars and organic acids concentrations were analyzed both in original and digested samples with the aim of estimating the effect on digestive processes on carbohydrates of original samples. Sugars and organic acids concentrations (g/L) are reported in Table 6.

**Table 6. Biochemical and nutritional characteristics of original and digested preparations. Lactic acid (g/L), Acetic acid (g/L), Glucose (g/L), Fructose (g/L), Mannitol (g/L), Maltose (g/L), Peptides (mg/mL), Resistant starch (RS, g/100g d.w.), Fibers (% d.m.). For original preparations, values in the same column with different superscript letters differ significantly (p < 0.05) based on one-way ANOVA (Tuckey-Kramer). For digested preparations, bold values highlight significant (p < 0.05) differences based on t-Test Student by comparing the original and the digested preparations. The data are the means of three independent analysis ± standard deviations (n =3). * Uncertain quantification due to detection limit. LOQ = limit of quantification.**

| | **Lactic acid** | **Acetic acid** | **Glucose** | **Fructose** | **Mannitol** | **Maltose** | **Peptides** | **RS** | **Fibers** |
|---|---|---|---|---|---|---|---|---|---|
| Original preparations | | | | | | | | | |
| **Preparation 1** | 0.2 ± 0.1^{c} | <LOQ | 1.8 ± 0.1^{d} | 1.1 ± 0.1^{b} | <LOQ | 12.1 ± 0.1^{e} | 9.5 ± 0.1^{d} | 0.8 ± 0.2^{ab} | 15.4 ± 1.7^{a} |
| **Preparation 2** | 0.3 ± 0.1^{c} | <LOQ | 2.0 ± 0.1^{d} | 1.2 ± 0.1^{b} | <LOQ | 16.0 ± 0.1^{c} | 9.3 ± 0.1^{d} | 1.1 ± 0.1^{a} | 14.4 ± 0.6^{a} |
| **Preparation 3** | 9.1 ± 0.1^{a} | 1.6 ± 0.1^{a} | 5.9 ± 0.1^{a} | 0.4 ± 0.1^{d} | 7.6 ± 0.1^{a} | 20.7 ± 0.1^{b} | 12.7 ± 0.2^{a} | 0.9 ± 0.1^{ab} | 14.8 ± 1.3^{a} |
| **Preparation 4** | 3.2 ± 0.1^{b} | 0.9 ± 0.1^{b} | 3.2 ± 0.1^{c} | 0.8 ± 0.1^{c} | 1.1 ± 0.1^{b} | 15.0 ± 0.1^{d} | 12.0 ± 0.1^{b} | 0.7 ± 0.1^{b} | 14.8 ± 0.8^{a} |
| **Preparation 5** | 0.2 ± 0.1^{c} | 0.1 ± 0.1^{c} | 3.8 ± 0.1^{b} | 2.5 ± 0.1^{a} | <LOQ | 20.9 ± 0.1^{b} | 11.4 ± 0.1^{c} | 0.8 ± 0.1^{ab} | 13.7 ± 0.7^{a} |
| **Preparation 6** | 0.2 ± 0.1^{c} | <LOQ | 0.6 ± 0.1^{e} | 1.3 ± 0.1^{b} | <LOQ | 25.6 ± 0.1^{a} | 9.1 ± 0.2^{d} | 1.0 ± 0.1^{ab} | 14.2 ± 1.7^{a} |

| Digested preparations | | | | | | | | | |
|---|---|---|---|---|---|---|---|---|---|
| **Preparation 1** | <LOQ | <LOQ | 24.7 ± 1.0 | <LOQ | 0.1 ± 0.1 | 247.5 ± 8.5 | 159.4 ± 6.9 | 0.8 ± 0.1 | 14.0 ± 0.2 |
| **Preparation 2** | <LOQ | <LOQ | **26.0 ± 1.5** | **2.4 ± 0.1** | 0.2 ± 0.1 | **239.5 ± 5.7** | **145.2 ± 7.2** | 0.7 ± 0.1 | 15.3 ± 1.7 |
| **Preparation 3** | **3.8 ± 0.2** | <LOQ | **34.0** ± **0.5** | <LOQ | **3.8 ± 0.2** | **253.7 ± 2.6** | **201.2 ± 8.1** | 0.9 ± 0.1 | 13.4 ± 0.9 |
| **Preparation 4** | **1.7** ± **0.1** | <LOQ | **27.0 ± 1.9** | <LOQ | 0.8 ± 0.3 | **249.2** ± **13.3** | **183.1 ± 10.5** | 0.9 ± 0.1 | 16.6 ± 0.1 |
| **Preparation 5** | 1.0 ± 0.1* | <LOQ | **26.3 ± 0.6** | 2.7 ± 0.1 | <LOQ | **243.0 ± 11.0** | **165.8 ± 12.3** | 0.9 ± 0.1 | 16.0 ± 0.7 |
| **Preparation 6** | 1.0 ± 0.1* | <LOQ | **22.9 ± 3.5** | **2.3 ± 0.1** | <LOQ | **227.9 ± 39.5** | **146.9 ± 2.3** | 0.9 ± 0.1 | 16.6 ± 1.1 |

Organic acids concentrations in original preparation 3 (9.1 ± 0.1 g/L lactic acid; 1.6 ± 0.1 g/L acetic acid) and preparation 4 (3.2 ± 0.1 g/L lactic acid; 0.9 ± 0.1 g/L acetic acid) were higher and statistically (p < 0.05) different compared to the other preparations, due to sourdough fermentation. In general, preparations according to the invention (preparations 3 and 4), and the longer fermentation of biga (72 h, preparation 5) resulted in higher (p < 0.05) glucose concentration (5.9 ± 0.1, 3.2 ± 0.1 and 3.8 ± 0.1 g/L, respectively), compared to the original preparations 1 and 2. Original preparation 6 produced without biga pre-dough, showed the lowest (p < 0.05) content of glucose among all preparations evaluated. Fructose concentration was significantly (p < 0.05) lower in preparation 3 (0.4 ± 0.1 g/L) and preparation 4 (0.8 ± 0.1 g/L), and significantly (p < 0.05) higher in preparation 5 (2.5 ± 0.1 g/L) compared to other original samples. The digestion process generally influenced the composition of organic acids and sugars (Table 6). The concentration of acetic acid was under the detection limit in all digested samples. Lactic acid significantly decreased in preparation 3 (3.8 ± 0.2 g/L) and preparation 4 (1.7 ± 0.1 g/L) compared to the original counterpart. Glucose and maltose levels strongly (p < 0.05) increased after digestion due to the starch degradation during the digestive process. The fructose concentration in digested preparations 1, 3 and 4 was lower the limit of quantification (<LOQ) showing a decrease compared to the original counterpart; on the contrary, the content of fructose in all the other preparations showed a slight increase. After digestion, mannitol was detected only in preparations 1, 2, 3 and 4, with a slight decrease in preparations 3 (p < 0.05) and 4 compared to the original counterpart.

**Peptides.** Original and digested samples were investigated for the content of total peptides. The concentration of peptides was determined on the WSE, prepared as reported above. For the total peptides (mg/ml) the O-phthaldialdehyde (OPA) assay was carried out (Church et al., 1983).

**Results.** Total peptides concentration was determined on both original and digested samples to assess the extent of protein hydrolysis as a result of fermentation and digestion. Total peptides concentration in original samples (Table 6) ranged between 9.1 ± 0.2 (preparation 6) and 12.7 ± 0.2 mg/mL (preparation 3). The content in original preparation 3 (12.7 ± 0.2 mg/mL), preparation 4 (12.0 ± 0.1 mg/mL) and preparation 5 (11.4 ± 0.1 mg/mL) is significantly (p < 0.05) higher than other original preparations, while the content in the original preparation 6 (9.1 ± 0.2 mg/mL) is significantly (p < 0.05) lower. Overall, the use of sourdough (preparation 3 and preparation 4) and the longer fermentation of biga (72 h) with only baker's yeast inclusion as leavening agents (preparation 5) resulted in a significantly (p < 0.05) higher production of peptides. Total peptides concentration significantly increased (p < 0.05) in all digested samples compared to original samples, due to proteins breakdown in the digestion process (Table 6). In particular, digested preparation 3 (201.2 ± 8.1 mg/mL) and 4 (183.1 ± 10.5 mg/mL) showed the highest values, suggesting that the release of peptides was facilitated by the sourdough.

**Total and individual free amino acids (FAA).** The WSE were used for FAA analysis by a Biochrom 30+ series Automatic Amino Acid Analyzer (Biochrom Ltd., Cambridge Science Park, United Kingdom), equipped with a Li-cation-exchange column (4.6 x 200 mm internal diameter) (De Pasquale et al., 2021). **Results.** All amino acids individual profiles and the total content before and after digestion are reported in Table 7.

**Table 7. Free amino acids profile of six original (mg/kg) and digested preparations (mg/L). For original and digested preparations, values in the same row with different superscript letters differ significantly (p < 0.05) based on one-way ANOVA (Tuckey-Kramer). The data are the means of three independent analysis ± standard deviations (n =3).**

**Table 7-1: Original preparations**

| | **Preparation 1** | **Preparation 2** | **Preparation 3** | **Preparation 4** | **Preparation 5** | **Preparation 6** |
|---|---|---|---|---|---|---|
| **Asp** | 13.43 ± 0.20^{d} | 14.35 ± 0.21^{d} | 95.45 ± 1.41^{a} | 39.09 ± 0.58^{c} | 57.23 ± 0.84^{b} | 13.82 ± 0.20^{d} |
| **Thr** | 4.16 ± 0.11^{d} | 4.76 ± 0.13^{c} | 4.71 ± 0.13^{c} | 4.35 ± 0.12^{cd} | 7.87 ± 0.21^{b} | 10.11 ± 0.27^{a} |
| **Ser** | 2.06 ± 0.05^{e} | 3.12 ± 0.08^{d} | 12.56 ± 0.31^{a} | 3.79 ± 0.09^{c} | 3.98 ± 0.10^{c} | 7.66 ± 0.19^{b} |
| **Glu** | 13.32 ± 0.45^{e} | 18.93 ± 0.64^{d} | 69.43 ± 2.34^{a} | 31.05 ± 1.05^{b} | 24.55 ± 0.83^{c} | 19.83 ± 0.67^{d} |
| **Gly** | 10.46 ± 0.24^{c} | 12.86 ± 0.29^{b} | 1.10 ± 0.03^{d} | 12.40 ± 0.28^{b} | 22.80 ± 0.52^{a} | 22.83 ± 0.52^{a} |
| **Ala** | 13.6 ± 0.30^{e} | 10.95 ± 0.24^{f} | 19.56 ± 0.43^{c} | 16.07 ± 0.35^{d} | 27.95 ± 0.62^{b} | 31.41 ± 0.69^{a} |
| **Val** | 10.04 ± 0.27^{e} | 11.03 ± 0.30^{de} | 21.85 ± 0.59^{a} | 11.95 ± 0.32^{d} | 19.2 ± 0.52^{b} | 14.79 ± 0.40^{c} |
| **Cys** | 20.30 ± 0.83^{bc} | 24.36 ± 0.99^{a} | 21.27 ± 0.87^{bc} | 19.00 ± 0.77^{c} | 21.49 ± 0.88^{b} | 25.01 ± 1.02^{a} |
| **Met** | 4.02 ± 0.14^{d} | 4.46 ± 0.15^{d} | 8.80 ± 0.30^{a} | 5.58 ± 0.19^{c} | 6.24 ± 0.21^{b} | 2.47 ± 0.08^{e} |
| **Ile** | 10.34 ± 0.30^{d} | 10.92 ± 0.31^{d} | 17.80 ± 0.51^{a} | 12.54 ± 0.36^{c} | 14.48 ± 0.42^{b} | 11.02 ± 0.32^{d} |
| **Leu** | 1.86 ± 0.06^{d} | 2.38 ± 0.08^{d} | 37.28 ± 1.28^{a} | 5.94 ± 0.2^{c} | 12.83 ± 0.44^{b} | 2.41 ± 0.08^{d} |
| **Tyr** | 0.90 ± 0.04^{e} | 1.67 ± 0.07^{e} | 21.72 ± 0.87^{a} | 10.53 ± 0.42^{c} | 19.18 ± 0.77^{b} | 5.31 ± 0.21^{d} |
| **Phe** | 1.39 ± 0.06^{d} | 1.50 ± 0.06^{d} | 28.25 ± 1.13^{a} | 6.13 ± 0.25^{c} | 14.40 ± 0.58^{b} | 2.72 ± 0.11^{d} |
| **GABA** | 4.58 ± 0.07^{f} | 7.53 ± 0.11^{e} | 66.92 ± 0.97^{a} | 45.65 ± 0.66^{c} | 59.67 ± 0.87^{b} | 32.87 ± 0.48^{d} |
| **Orn** | 3.46 ± 0.11^{b} | 2.53 ± 0.08^{c} | 3.93 ± 0.13^{a} | 3.92 ± 0.13^{a} | 3.49 ± 0.12^{b} | 0.53 ± 0.02^{d} |
| **Lys** | 4.25 ± 0.11^{e} | 7.33 ± 0.18^{c} | 5.01 ± 0.13^{d} | 4.49 ± 0.11^{de} | 10.02 ± 0.25^{b} | 12.34 ± 0.31^{a} |
| **His** | 1.64 ± 0.05^{b} | 1.15 ± 0.03^{c} | 1.22 + 0.04^{c} | 1.19 ± 0.04^{c} | 2.05 ± 0.06^{a} | 1.58 ± 0.05^{b} |
| **Trp** | 0.02 ± 0.01d | 0.29 ± 0.01^{d} | 26.88 ± 1.02^{a} | 10.59 ± 0.4^{c} | 20.56 ± 0.78^{b} | 20.22 ± 0.76^{b} |
| **Arg** | 23.03 ± 0.57^{e} | 35.69 ± 0.88^{d} | 72.71 ± 1.79^{a} | 41.47 ± 1.02^{c} | 45.38 ± 1.12^{b} | 34.33 ± 0.84^{d} |
| **Pro** | 18.33 ± 0.93^{c} | 14.39 ± 0.73^{d} | 20.68 ± 1.05^{c} | 25.78 ± 1.31^{b} | 32.2 ± 1.64^{a} | 24.04 ± 1.22^{b} |
| **Total** | 207.98 ± 4.35^{d} | 228.87 ± 5.16^{d} | 610.53 ± 14.72^{a} | 356.25 ± 8.16^{c} | 467.43 ± 11.29^{b} | 333.77 ± 8.03^{c} |

**Table 7-2: Digested preparations**

| | **Preparation 1** | **Preparation 2** | **Preparation 3** | **Preparation 4** | **Preparation 5** | **Preparation 6** |
|---|---|---|---|---|---|---|
| **Asp** | 11.94 ± 1.04^{b} | 12.06 ± 3.14^{b} | 22.56 ± 0.89^{a} | 22.48 ± 0.66^{a} | 20.68 ± 2.25^{a} | 14.29 ± 2.11^{b} |
| **Thr** | 32.29 ± 4.64^{c} | 32.32 ± 3.13^{c} | 56.41 ± 0.90^{a} | 51.77 ± 3.95^{ab} | 47.14 ± 3.00^{b} | 36.49 ± 2.22^{c} |
| **Ser** | 38.38 ± 4.87^{d} | 40.29 ± 1.63^{d} | 76.15 ± 0.61^{a} | 64.69 ± 7.58^{ab} | 59.37 ± 4.54^{bc} | 47.10 ± 4.59^{cd} |
| **Glu** | 47.79 ± 6.29^{cd} | 46.02 ± 4.91^{d} | 97.97 ± 0.99^{a} | 78.01 ± 5.59^{b} | 74.41 ± 2.77^{b} | 59.30 ± 4.73^{c} |
| **Gly** | 15.58 ± 2.12^{c} | 15.31 ± 0.38^{c} | 27.81 ± 0.33^{a} | 24.84 ± 2.89^{a} | 22.94 ± 1.74^{ab} | 18.40 ± 1.63^{bc} |
| **Ala** | 46.64 ± 5.96^{c} | 44.12 ± 4.00^{c} | 72.72 ± 3.30^{a} | 70.19 ± 6.89^{a} | 61.27 ± 3.73^{ab} | 48.93 ± 2.50^{bc} |
| **Val** | 61.91 ± 7.06^{c} | 58.25 ± 4.47^{c} | 98.88 ± 4.74^{a} | 93.85 ± 7.67^{ab} | 83.7 ± 3.45^{b} | 64.12 ± 3.74^{c} |
| **Cys** | 19.20 ± 3.74^{bc} | 16.86 ± 0.49^{c} | 33.94 ± 2.15^{a} | 35.04 ± 1.30^{a} | 33.17 ± 0.38^{a} | 23.51 ± 2.97^{b} |
| **Met** | 23.78 ± 3.14^{bc} | 20.70 ± 2.81^{c} | 34.23 ± 3.13^{a} | 34.96 ± 1.02^{a} | 29.88 ± 0.49^{ab} | 22.05 ± 0.95^{c} |
| **Ile** | 54.20 ± 6.89^{c} | 53.02 ± 3.24^{c} | 87.40 ± 3.51^{a} | 81.57 ± 7.22^{ab} | 72.89 ± 2.33^{b} | 57.61 ± 2.38^{c} |
| **Leu** | 116.11 ± 16.98^{bc} | 105.81 ± 9.30^{c} | 158.83 ± 7.84^{a} | 155.39 ± 12.14^{a} | 137.75 ± 1.38a^{b} | 111.67 ± 0.01b^{c} |
| **Tyr** | 76.50 ± 10.40^{bc} | 67.14 ± 6.32^{c} | 107.24 ± 6.75^{a} | 104.90 ± 5.77^{a} | 92.52 ± 0.69^{ab} | 72.59 ± 0.03^{c} |
| **Phe** | 78.96 ± 10.90^{bc} | 70.86 ± 9.15^{c} | 109.01 ± 6.54^{a} | 109.95 ± 4.00^{a} | 96.69 ± 0.01^{ab} | 74.39 ± 0.63^{c} |
| **GABA** | 2.25 ± 0.30^{a} | 1.63 ± 0.71^{a} | 3.06 ± 0.71^{a} | 2.26 ± 1.45^{a} | 2.78 ± 0.01^{a} | 1.08 ± 0.30^{a} |
| **Orn** | 1.57 ± 0.33^{ab} | 0.69 ± 0.04^{c} | 2.19 ± 0.03^{a} | 2.00 ± 0.25^{ab} | 1.39 ± 0.42^{b} | 1.52 ± 0.12^{ab} |
| **Lys** | 50.75 ± 5.88^{d} | 49.28 ± 4.94^{d} | 77.37 ± 4.84^{a} | 7507 ± 4.26^{ab} | 64.49 ± 0.42^{bc} | 53.17 ± 1.55^{cd} |
| **His** | 26.44 ± 3.27^{c} | 25.18 ± 2.06^{c} | 42.61 ± 2.09^{a} | 39.48 ± 2.30^{a} | 33.75 ± 0.81^{b} | 27.68 ± 0.86^{c} |
| **Trp** | 27.07 ± 3.28^{c} | 26.79 ± 3.00^{c} | 41.59 ± 2.37^{a} | 40.51 ± 2.42^{ab} | 35.19 ± 0.44^{b} | 27.01 ± 0.80^{c} |
| **Arg** | 81.11 ± 9.47^{bc} | 72.52 ± 8.88^{c} | 114.04 ± 7.43^{a} | 112.21 ± 4.07^{a} | 92.06 ± 1.05^{b} | 75.45 ± 0.12^{bc} |
| **Pro** | 4.42 ± 0.29^{d} | 4.53 ± 0.13^{d} | 11.31 ± 0.97^{a} | 6.71 ± 0.33^{b} | 6.07 ± 0.47^{bc} | 4.95 ± 0.43^{cd} |
| **Total** | 842.60 ± 110.84^{c} | 786.79 ± 71.96^{c} | 1313.11 ± 51.92^{a} | 1240.60 ± 81.57^{ab} | 1099.22 ± 26.98^{b} | 867.89 ± 32.30^{c} |

Total free amino acids concentration in the original preparation 3 (610.53 + 14.72 mg/kg) was significantly (p < 0.05) higher than other preparations, followed by preparation 5 (467.43 ± 11.29 mg/kg) and preparation 4 (356.25 ± 8.16 mg/kg). In general, most of essential amino acids resulted higher in preparation 3, preparation 4 and preparation 5. Specifically, Val, Met, Ile, Leu, Phe and Trp were statistically (p < 0.05) higher in preparation 3 compared to the other preparations. Furthermore, the fermentation of biga for 72 h seems to affect majorly the release of essential amino acids respect to the preparation 4 (sourdough added in the final dough). The content of γ-aminobutyric acid (GABA) was higher (p < 0.05) in preparation 3 (66.92 ± 0.97 mg/kg), followed by preparation 5 (59.67 ± 0.87 mg/kg). As expected, after digestion, the proteolysis process occurred by the digestive enzymes favored the release of the most individual FAA, expressed as mg/L of digesta. Overall, total FAA on preparation 3 was the highest (1313.11 ± 51.92 mg/L), followed by preparations 4 and 5 (1240.60 ± 81.57 and 1099.22 ± 26.98 mg/L, respectively). The individual amino acid profiles resulted in higher abundance on preparations produced with sourdough (preparation 3 followed by preparation 4). Overall, essential amino acids in digested samples, namely Thr, Val, Met, Ile, Leu, Phe, Lys, His and Trp, were statistically (p < 0.05) higher on preparation 3, even when they were not statistically (p < 0.05) higher on the original preparations. Moreover, the fermentation of biga for 72 h influenced the release of amino acids after digestive process, on the contrary, preparations 1, 2 and 6 showed a less content for all free amino acids.

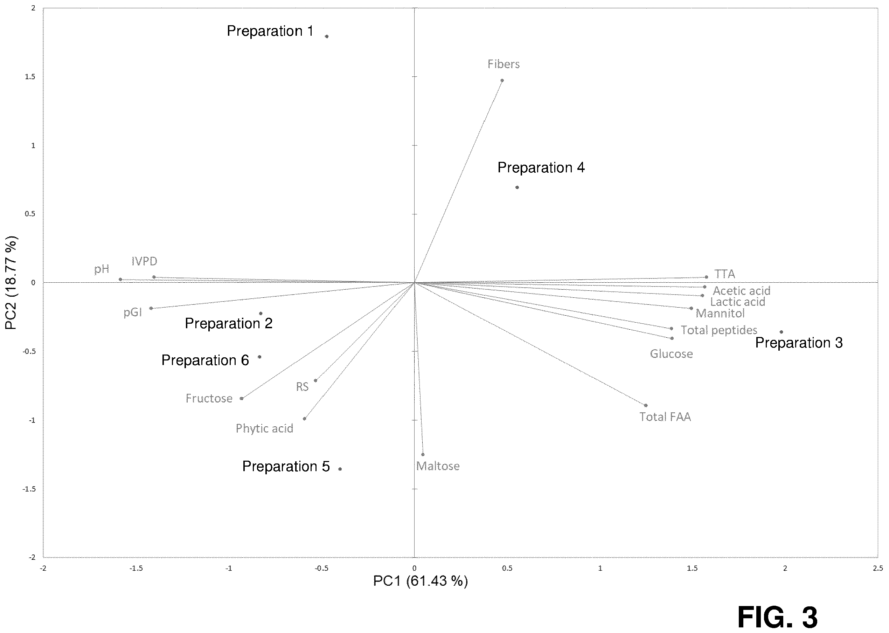

**2.4 Principal Component Analysis (PCA).** Multivariate analysis was carried out to highlight differences among six original preparations (Figure 3). Data on pH, TTA, phytic acid, IVPD and pGI, sugars, organic acids, peptides, total free amino acids, resistant starch and total dietary fibers of each original preparations (n = 6) were analyzed to decrease the dimensionality. PC1 and PC2 explained, respectively, 61.43% and 18.77% of the total variance. Projection on the Cartesian plane clearly clustered the samples into 3 groups. The majority of the preparations produced without the use of sourdough placed on the IV quadrant of the Cartesian plane, and they are characterized by the variables phytic acid, pGI, RS, fructose, and maltose. Preparation 3 and preparation 4 grouped in the opposite zone of the plane, and values of TTA, organic acids, total peptides and free amino acids, mannitol and glucose, mainly contributed to the inter-discrimination. An independent cluster was formed by preparation 1. These results show that the dough and baked products in accordance with preparations 3 and 4 can be clearly distinguished from the other products.

### 3. Conclusions

The evaluation of the acidic condition (pH and TTA) allowed the discrimination of preparations according to the invention (both preparation 3 and preparation 4).

Moreover, it was found that the longer fermentation time of biga (72 h, i.e. preparation 5), leads to higher acidification compared with other preparations produced with biga included with only baker's yeast. Glucose and maltose concentrations increased from original to digested samples, due to the breakdown of complex carbohydrates into smaller molecules during the digestive process: this digestive process was higher in preparations fermented with sourdough. This was confirmed by the analysis of sugars through HPLC-UV.

Preparation 3 containing biga added with sourdough showed higher concentrations of organic acids and sugars, as a result of complex carbohydrates fermentation by the microbial ecosystem present in sourdough.

The same was found for the total peptides content where the inclusion of sourdough to the biga pre-ferment and final dough (preparation 3 and 4) and longer biga fermentation time (72 h) were associated with an increased peptides production.

PER index which reflects the nutritional quality of food proteins was higher on preparation 3.

Furthermore, NI that combines the qualitative and quantitative protein factors was significantly higher on preparation 3 (with sourdough) and 5 (biga fermented for 72 h).

Total amino acids content was higher in preparations where the inclusion of sourdough was involved (preparation 3). The release of free amino acids was favored by the fermentation from the microbial community present in the sourdough that was involved in the breakdown of protein and peptides of the matrix itself. Overall, individual amino acids profile showed a similar trend compared to the total FAA concentration: preparation 3 showed the highest concentrations together with preparations 5 and 4.

The FAA absorption during digestion, confirmed the trend of the amino acids as described above for the original preparations. Furthermore, the individual FAA profile demonstrated the positive effect of the biga included with sourdough also at the end of SI digestion. The use of sourdough has previously been associated with the manufacture of low-GI. In agreement, preparation 3 produced with biga including sourdough was the only one that showed a significantly (p < 0.05) lower pGI among all the preparations analyzed. Dietary fibers, as non-digested part, have been associated with several beneficial effects on human health, mainly due to their role as prebiotics. As expected, statistical analysis revealed no significant (p < 0.05) differences between fibers content and resistant starch in original and digested preparations. This confirmed the validity of the *in vitro* digestion carried out, also on indigestible food components.

Dietary fibers content did not show statistical (p > 0.05) differences among the six preparations both in original and digested samples, although remodulation of soluble dietary fibers and insoluble dietary could be present in the six preparations due to the use of sourdough.

These findings showed a discrimination (PCA; Figure 3) between preparations produced with biga or dough including sourdough and samples produced with baker's yeast as the only leavening agent, wherein the samples including sourdough are associated with better nutritional characteristics.

The addition of sourdough in both biga and final dough as in preparations according to the invention 3 and 4, respectively, was found to be a suitable leavening agent to produce baked goods with improved nutritional characteristics in terms of peptides, amino acids and carbohydrates.

### References

AOAC, Official Methods of Analysis of AOAC International, 18th ed. AOAC International, Arlington, VA, 2005
Akeson, W. R., & Stahmann, M. A. (1964). a Pepsin Pancreatin Digest Index of Protein Quality Evaluation. The Journal of Nutrition, 83(3), 257-261.
Bradford, M. M. (1976) . A rapid and sensitive method for the quantitation of microgram quantities of protein utilizing the principle of protein-dye binding. Analytical Biochemistry*.*
Brodkorb, A., Egger, L., Alminger, M., Alvito, P., Assun 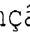 ão, R., Ballance, S., Bohn, T., BourlieuLacanal, C., Boutrou, R., Carrière, F., Clemente, A., Corredig, M., Dupont, D., Dufour, C., Edwards, C., Golding, M., Karakaya, S., Kirkhus, B., Le Feunteun, S., Recio, I. (2019). INFOGEST static in vitro simulation of gastrointestinal food digestion. *Nature Protocols.*
Capriles, V. D., & Arêas, J. A. G. (2013). Effects of prebiotic inulin-type fructans on structure, quality, sensory acceptance and glycemic response of gluten-free breads. Food and Function*.*
Cauvain, S. P., & Clark, R. H. (2019). Baking technology and nutrition: Towards a healthier world. In Baking Technology and Nutrition: Towards a Healthier World*.*
Church, A. C. (1983). Vasopressin potentiates the stimulation of cyclic AMP accumulation by norepinephrine. Peptides*.*
Costantini, A., Da, A., Nikoloudaki, O., Montemurro, M., Di, R., Genot, B., Gobbetti, M., & Giuseppe, C. (2022). How cereal flours, starters , enzymes , and process parameters affect the in vitro digestibility of sourdough bread. Food Research International, 159(June), 111614.
Crisan, E.V.; Sands, A. Nutritional Value; Academic Press: New York, NY, USA, 1978; pp. 137- 168.
De Angelis, M., Rizzello, C. G., Alfonsi, G., Arnault, P., Cappelle, S., Di Cagno, R., & Gobbetti, M. (2007). Use of sourdough lactobacilli and oat fibre to decrease the glycaemic index of white wheat bread. British Journal of Nutrition*.*
Doi, E., Shibata, D., & Matoba, T. (1981). Modified colorimetric ninhydrin methods for peptidase assay. Analytical Biochemistry*.*
Graça, C., Raymundo, A., & Sousa, I. de. (2021). Yoghurt and curd cheese addition to wheat bread dough: Impact on in vitro starch digestibility and estimated glycemic index. Food Chemistry*.*
Ihekoronye, A. I. (1988). A rapid in vitro enzymic and chromatographic predictive model for the in vivo rat-based protein efficiency ratio of mixed food proteins. Food / Nahrung*.*
Oser, B. L. (1959). An Integrated Essential Amino Acid Index for Predicting the Biological Value of Proteins. In Protein and Amino Acid Nutrition*.*
Rizzello, C. G., Curiel, J. A., Nionelli, L., Vincen-tini, O., Di Cagno, R., Silano, M., Gobbetti, M., & Coda, R. (2014). Use of fungal proteases and selected sourdough lactic acid bacteria for making wheat bread with an intermediate content of gluten. Food Microbiology, 37, 59-68.
Weiss, W., Vogelmeier, C., & Görg, A. (1993). Electrophoretic characterization of wheat grain allergens from different cultivars involved in bakers' asthma. ELECTROPHORESIS*.*
Zeppa, G., Conterno, L., & Gerbi, V. (2001). Determination of organic acids, sugars, diacetyl, and acetoin in cheese by high-performance liquid chromatography. Journal of Agricultural and Food Chemistry*.*

## Claims

1. Method for preparing a dough for baked food products comprising the steps of
providing a first composition comprising water, flour, and a starter based on lactic and/or acetic bacteria and optional wild yeasts and allowing fermentation of said first composition to form a fermented sourdough;
mixing the fermented sourdough with water, flour and baker's yeast, and
allowing fermentation of said mixture to form a final dough.

2. Method according to claim 1, comprising providing a second composition comprising water, flour and baker's yeast and mixing said fermented sourdough with said second composition in the mixing step.

3. Method according to claim 1 or 2, wherein the first composition is fermented at a temperature of 18-35°C for at least 12 hours to form said sourdough and wherein said mixture is fermented at a temperature of 10-22°C for at least 24 hrs.

4. Method according to claim 3, wherein the first composition is fermented at a temperature of 30 ° C for at least 18 hours and wherein said mixture is fermented at 16°C for at least 48 hrs.

5. Method for preparing a dough for baked food products comprising the steps of
providing a first composition comprising water, flour, and a starter based on lactic and/or acetic bacteria and optional wild yeasts and allowing fermentation of said first composition to form a fermented sourdough;
providing a second composition comprising water, flour and baker's yeast and allowing fermentation of said second composition separate from the first composition to form a pre-dough;
mixing the fermented sourdough with the pre-dough to provide a final dough.

6. Method according to claim 5, wherein the first composition is fermented at a temperature of 18-35 for at least 12 hours and wherein said second composition is fermented at a temperature of 10-22°C for at least 24 hrs.

7. Method according to claim 6, wherein the first composition is fermented at a temperature of 30 ° C for at least 18 hours and wherein said second composition is fermented at 16°C for at least 48 hrs.

8. Method according to any of the previous claims, wherein the first composition does not contain added baker's yeast.

9. Method according to any of the previous claims, wherein the second composition consists of water, flour and baker's yeast.

10. Method according to any of the previous claims, wherein the final dough contains 75-85 wt.% water.

11. A dough, obtained or obtainable by the method according to any of the claims 1 to 10.

12. Method for preparing a baked or partially baked food product, comprising
preparing a dough in accordance with the method according to any of the claims 1 to 11;
preparing a baked or partially food product with said dough, comprising proofing the dough, allowing the proofed dough to rest, shaping and sizing the proofed dough and baking or partially baking the shaped and sized dough.

13. Baked or partially baked product, obtained or obtainable by the method according to claim 11.

14. Baked or partially baked product according to claim 13, wherein said baked or partially baked food product is a flatbread, preferably wherein said flatbread is selected from the group of pinsa, focaccia, pita or naan.

15. Baked or partially baked product according to claim 14, wherein said flatbread is a pinsa flatbread.
